# EUROPÄISCHE PATENTSCHRIFT

(11) **EP 2 304 263 B1**
(45) Veröffentlichungstag und Bekanntmachung des Hinweises auf die Patenterteilung: **16.11.2011**
(21) Anmeldenummer: 09777145.5
(22) Anmeldetag: 13.07.2009
(51) Int. Cl.: F16D 65/12

(54) **WELLENBREMSSCHEIBE, INSBESONDERE FÜR EIN SCHIENENFAHRZEUG**
SHAFT BRAKE DISC, IN PARTICULAR FOR A RAIL VEHICLE
DISQUE DE FREIN D'ESSIEU, EN PARTICULIER POUR UN VÉHICULE FERROVIAIRE

(30) Priorität: 18.07.2008 DE 102008033742
(43) Veröffentlichungstag der Anmeldung: 06.04.2011
(73) Patentinhaber: KNORR-BREMSE Systeme für Schienenfahrzeuge GmbH, 80809 München (DE)
(72) Erfinder: SEIFERT, Peter, 85386 Dietersheim (DE); NIESSNER, Matthias, 85737 Ismaning (DE); LUTZ, Rudolf, 82216 Maisach/Gernlinden (DE)
(74) Vertreter: Mattusch, Gundula
(86) Internationale Anmeldenummer: PCT/EP2009/005067
(87) Internationale Veröffentlichungsnummer: WO 2010/006748

(56) Entgegenhaltungen:
- EP-A- 0 293 868
- EP-A- 0 777 062
- DE-B3- 10 351 592
- US-A1- 2004 182 654

## Beschreibung

Die Erfindung betrifft eine Wellenbremsscheibe, insbesondere für einen Schienenfahrzeug, nach dem Oberbegriff des Anspruchs 1.

Eine derartige Wellenbremsscheibe ist aus der DE 38 14 614 A1 bekannt. Zur Befestigung des Reibrings an einer Nabe oder Welle eines Schienenfahrzeuges sind Anschlussflansche, die am Innenumfang des Reibrings angeordnet sind und sich radial nach innen erstrecken, vorgesehen, durch die Schrauben geführt sind, die in die Nabe eingreifen.

Dabei soll der Spannring, durch den die Schrauben geführt sind und die sich daran mit ihrem Kopf oder vergleichbaren Teilen abstützen, unter anderem verhindern, dass die Verschraubung bei einer Lageveränderung der miteinander verbundenen Teile auf Biegung beansprucht wird.

Über spezielle Sicherungselemente, die einerseits in der Nabe gehalten sind und andererseits in den Reibring eingreifen, wird eine Verdrehsicherung erreicht. Diese Sicherungselemente dienen der Übertragung des Bremsmomentes ebenso, wie ein vorhandener Reibschluss zwischen den Anschlussflanschen des Reibringes und der Nabe.

Der Spannring hingegen ist nicht zur Übertragung von Bremsmomenten geeignet, da die Schrauben mit einem gewissen Spiel sowohl durch den Spannring wie auch durch die Anschlussflansche geführt sind.

Dies führt dazu, dass bei einer wärmebedingten Ausdehnung des Reibrings durch den Spannring keine ausreichende Zentrierung des Spannringes gewährleistet ist, wodurch sich zusätzliche Biegebeanspruchungen der Schrauben ergeben.

Neben diesen funktionalen Nachteilen ergibt sich bei der Herstellung der Wellenbremsscheibe auch eine ungünstige Kostenstruktur, insbesondere aufgrund der als Sonderteile herzustellenden Sicherungselemente.

Aus der EP 0 293 868 A2 ist eine Wellenbremsscheibe bekannt, bei der die Bremsscheibe zwischen zwei Spannringen eingespannt ist, die ebenso wie ein Nabenkörper in Umfangsrichtung durch eingefügte Blattfedern formschlüssig gehalten sind, wobei die Blattfedern jeweils in einem Schlitz des Reibringes und des Nabenkörpers positioniert sind.

Der Erfindung liegt die Aufgabe zugrunde, eine Wellenbremsscheibe der gattungsgemäßen Art so weiterzuentwickeln, dass ihre Funktionssicherheit verbessert und ihre Standzeit sowie eine kostengünstigere Herstellung möglich wird.

Diese Aufgabe wird durch eine Wellenbremsscheibe mit den Merkmalen des Anspruchs 1 gelöst.

Durch das formschlüssige Ineinandergreifen des Spannringes und der Nabe wird der Spannring zuverlässig zentriert, also auch dann, wenn der Reibring aufgrund einer wärmebedingten radialen Ausdehnung keine radiale Abstützung für den Spannring bietet.

In diesem Fall wird der Spannring durch die Nabe gehalten, in die bevorzugt an den Spannring angeformte Formschlussteile eingreifen, beispielsweise als Klauen, die in stirnseitigen Nuten der Nabe einliegen.

Dabei sind zumindest drei Klauen und entsprechende Nuten vorgesehen, die jeweils radial zur Zentralachse hin ausgerichtet sind.

Die insoweit verdrehsichere Verbindung des Spannringes mit der Nabe ermöglicht auch eine Bremsmomentenübertragung auf die Nabe, wobei dies über eine reibschlüssige Anlage des Spannringes am Reibring erfolgt.

Neben den beschriebenen rein funktionalen Vorteilen, zeichnet sich die Erfindung insbesondere durch ihre fertigungstechnische Realisierung aus, da auf den Einsatz der zum Stand der Technik beschriebenen, bisher notwendigen Sicherungselemente verzichtet werden kann, mit denen bislang eine Verdrehsicherung zwischen der Nabe und dem Reibring hergestellt wird.

Diese Sicherungselemente sind, da sie passgenau vorliegen müssen, nur mit einem entsprechenden Aufwand herzustellen, auf den nun verzichtet werden kann.

Durch die in jedem Betriebszustand gewährleistete Zentrierung des Spannringes werden zusätzliche Biegebeanspruchungen der Schrauben vermieden, wie sie bisher auftreten konnten.

Naturgemäß führt dies nicht nur zu einer Funktionssicherheit der Wellenbremsscheibe insgesamt, sondern auch zu einer Erhöhung der Standzeit, da die Gefahr eines Dauerbruchs der Schrauben nun praktisch ausgeschlossen ist.

Die Formschlusselemente, insbesondere die genannten, in Nuten der Nabe eingerasteten Klauen sind vorzugsweise mit gleichem Winkelabstand am Spannring angeordnet, wodurch eine gleichmäßige und damit optimale Krafteinleitung gegeben ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Wellenbremsscheibe in einer Vorderansicht

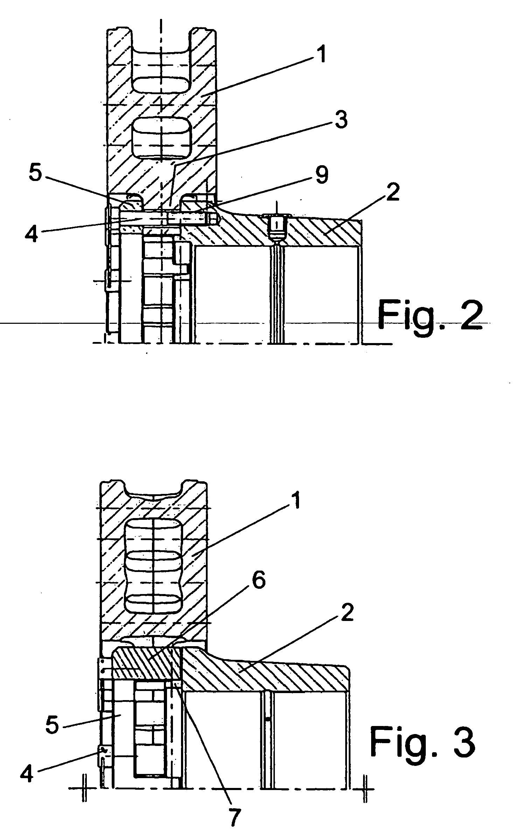

- Figur 2: einen Schnitt durch die Wellenbremsscheibe gemäß der Linie II-II in Figur 1
- Figur 3: einen weiteren Schnitt durch die Wellenbremsscheibe entsprechend der Linie III-III in Figur 1
- Figuren 4 und 5: jeweils ein Einzelteil der Wellenbremsscheibe in einer perspektivischen Ansicht.

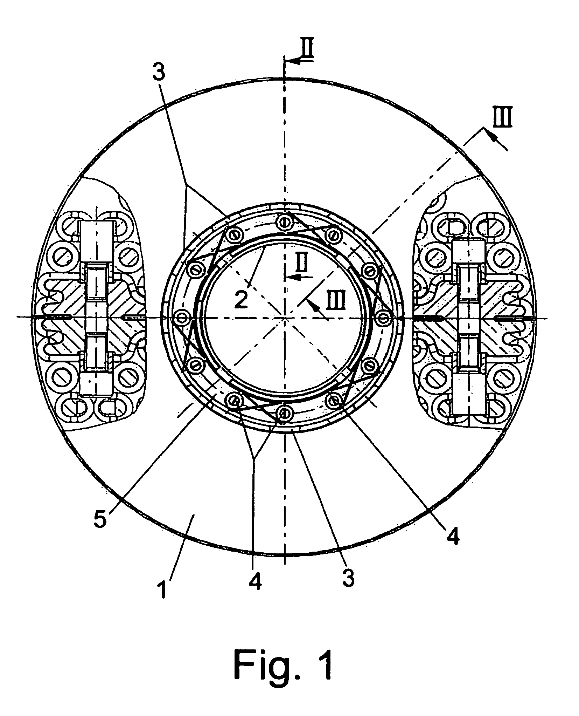

In der Figur 1 ist eine Wellenbremsscheibe dargestellt, die einen Reibring 1 aufweist, der durch Schrauben 4 mit einer Nabe 2 verbunden ist.

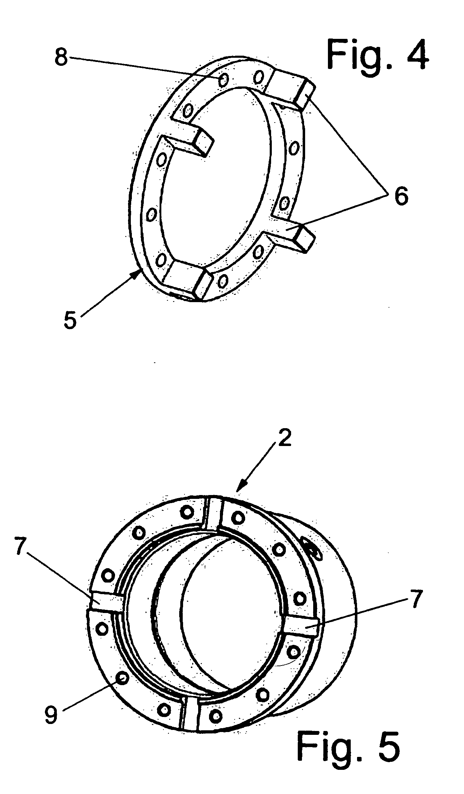

Dabei sind die Schrauben 4 in stirnseitig in der Nabe 2 vorgesehene Gewindebohrungen 9 eingedreht, während sie mit ihrem Schaft durch Durchgangsbohrungen 10 des Reibrings 9 und Durchgangsbohrungen 8 (Figur 4) eines Spannringes 5 geführt sind, der auf Anschlussflanschen 3 des Reibringes 1 und zwar auf der der Nabe 2 gegenüberliegenden Seite anliegt.

Dieser Spannring 5 bildet für die Schrauben 4, d.h., deren Köpfe, ein Widerlager, durch das der Reibring 1 gegen die Nabe 2 gepresst wird.

Die Anschlussflansche 3 des Reibrings 1 sind über dessen inneren Umfang gleichmäßig verteilt und erstrecken sich radial nach innen.

Erfindungsgemäß greifen der Spannring 5 und die Nabe 2 formschlüssig ineinander. Dazu weist der einstückig ausgebildete Spannring 5 im vorliegenden Ausführungsbeispiel vier, vorzugsweise angeformte Klauen 6 auf, die jeweils klotzartig ausgebildet sind und sich parallel zu einer Zentralachse X erstrecken. Diese mit gleichem Winkelabstand zueinander angeordneten Klauen 6 greifen in daran angepasste Nuten 7 ein, die stirnseitig in die Nabe 2 eingebracht sind, wobei die Nuten 7 den Gewindebohrungen 9 benachbart sind.

Um eine in jedem Betriebszustand angestrebte Zentrierung des Spannringes 5 zu erreichen, sind mindestens drei Klauen vorzusehen, die auch zu einer gleichmäßigen Bremsmomentenübertragung von dem Reibring 1 auf die Nabe 2 in gleichem Winkelabstand zueinander angeordnet sein sollten.

Anstelle der klotzartigen Klauen 6 sind selbstverständlich auch andere geometrische Formen denkbar. Wesentlich ist, dass zwischen dem Spannring 5 und der Nabe 2 umfänglich und radial ein Formschluss gebildet ist.

Dabei können die Klauen 6, wie erwähnt, an den Spannring 5 angeformt sein, denkbar ist aber auch, diese als separate Teile mit dem Spannring 5 im Übrigen fest zu verbinden.

Grundsätzlich kann selbstverständlich auch die Nabe statt der Nuten 7 mit Klauen oder anders gestalteten Vorsprüngen versehen sein, die in angepasste Nuten oder ähnliche Vertiefungen des Spannringes 5 eingreifen.

## Patentansprüche

1. Wellenbremsscheibe, insbesondere für ein Schienenfahrzeug, mit einem Reibring (1), der mittels Schrauben (4) an einer Nabe (2) befestigt ist, die durch einen am Innenumfang des Reibringes (1) vorgesehenen, an Anschlussflanschen (3) anliegenden Spannring (5) gerührt sind, der ein Widerlager für die Schrauben (4) bildet, **dadurch gekennzeichnet, dass** der Spannring (5) und die Nabe (2) formschlüssig ineinander greifen, wozu die Nabe (2) und der Spannring (5) auf ihren einander zugewandten Seiten mit korrespondierenden Vorsprüngen und Vertiefungen versehen sind.

2. Wellenbremsscheibe nach Anspruch 1, **dadurch gekennzeichnet, das** die Vorsprünge als Klauen (6) ausgebildet sind, die in Nuten (7) eingreifen.

3. Wellenbremsscheibe nach Anspruch 2, **dadurch gekennzeichnet, das** die Klauen (6) am Spannring (5) angeordnet sind und die Nuten (7) an der zugewandten Stirnseite der Nabe (2).

4. Wellenbremsscheibe nach einem der Ansprüche 2 oder 3, **dadurch gekennzeichnet, das** die Klauen (6) klotzartig ausgebildet sind und sich parallel zu einer Zentralachse (X) erstrecken.

5. Wellenbremsscheibe nach einem der Ansprüche 2 bis 4, **dadurch gekennzeichnet, das** die Klauen (6) durch den zwischen zwei Anschlussflanschen (3) gebildeten Raum geführt sind.

6. Wellenbremsscheibe nach einem der Ansprüche 2 bis 5, **dadurch gekennzeichnet, das** die Vorsprünge bzw. Vertiefungen des Spannrings (5) und der Nabe (2) mit gleichem Winkelabstand angeordnet sind.

7. Wellenbremsscheibe nach einem der vorhergehenden Ansprüche, **dadurch gekennzeichnet, das** mindestens drei miteinander korrespondierende Formschlussmittel vorgesehen sind.

8. Wellenbremsscheibe nach einem der Ansprüche 2 bis 7, **dadurch gekennzeichnet, das** die Klauen (6) an den Spannring (5) angeformt sind.

9. Wellenbremsscheibe nach einem der Ansprüche 2 bis 8, **dadurch gekennzeichnet, das** die Klauen (6) als separate Teile fest mit dem Spannring (5) verbunden sind.

10. Wellenbremsscheibe nach einem der vorhergehenden Ansprüche, **dadurch gekennzeichnet, das** die Vorsprünge und Vertiefungen sich radial zur Zentralachse (X) erstrecken.

## Claims

1. Shaft brake disc, in particular for a rail vehicle, having a friction ring (1) which is fastened to a hub (2) by means of bolts (4) which are guided through a clamping ring (5) provided on the inner circumference of the friction ring (1), which bears against connecting flanges (3) and which provides an abutting support for the bolts (4), **characterised in that** the clamping ring (5) and the hub (2) interlock positively with one another, for which purpose the hub (2) and the clamping ring (5) are provided on their opposing sides with corresponding projections and depressions.

2. Shaft brake disc according to claim 1, **characterised in that** the projections are embodied as claws (6), which engage in slots (7).

3. Shaft brake disc according to claim 2, **characterised in that** the claws (6) are arranged on the clamping ring (5) and the slots (7) are arranged on the facing end face of the hub (2).

4. Shaft brake disc according to claim 2 or 3, **characterised in that** the claws (6) are of a block-shaped design and extend parallel to a central axis (X).

5. Shaft brake disc according to any of claims 2 to 4, **characterised in that** the claws (6) are guided through the space formed between two connecting flanges (3).

6. Shaft brake disc according to any of claims 2 to 5, **characterised in that** the projections and depressions of the clamping ring (5) and the hub (2) are arranged at the same angular spacing.

7. Shaft brake disc according to any of the preceding claims, **characterised in that** at least three corresponding means of interlocking are provided.

8. Shaft brake disc according to any of claims 2 to 7, **characterised in that** the claws (6) are integrally formed onto the clamping ring (5).

9. Shaft brake disc according to any of claims 2 to 8, **characterised in that** the claws (6) are connected to the clamping ring (5) as separate parts.

10. Shaft brake disc according to any of the preceding claims, **characterised in that** the projections and depressions extend radially in relation to the central axis (X).

## Revendications

1. Disque de frein d'essieu, notamment pour un véhicule ferroviaire, comprenant un anneau (1) de friction, qui est fixé à un moyeu (2) au moyen de vis (4), qui sont guidées par un anneau (5) de serrage prévu sur le pourtour intérieur de l'anneau (1) de friction, s'appliquant à des brides (3) de raccordement et formant une butée pour les vis (4), **caractérisé en ce que** l'anneau (5) de serrage et le moyeu (2) s'interpénètrent à complémentarité de forme, le moyeu (2) et l'anneau (5) de serrage étant pourvus à cet effet de saillies et de cavités, qui se correspondent sur leurs faces tournées l'une vers l'autre.

2. Disque de frein d'essieu suivant la revendication 1, **caractérisé en ce que** les saillies sont constituées sous forme de griffes (6), qui pénètrent dans des rainures (7).

3. Disque de frein d'essieu suivant la revendication 2, **caractérisé en ce que** les griffes (6) sont disposées sur l'anneau (5) de serrage et les rainures (7) sur la face frontale du moyeu (2), qui est tournée vers l'anneau (5) de serrage.

4. Disque de frein d'essieu suivant l'une des revendications 2 ou 3, **caractérisé en ce que** les griffes (6) sont en forme de blocs et s'étendent parallèlement à un axe (X) central.

5. Disque de frein d'essieu suivant l'une des revendications 2 à 4, **caractérisé en ce que** les griffes (6) sont guidées dans l'espace formé entre deux brides (3) de raccordement.

6. Disque de frein d'essieu suivant l'une des revendications 2 à 5, **caractérisé en ce que** les saillies ou les cavités de l'anneau (5) de serrage et du moyeu (2) sont disposées à un même intervalle angulaire.

7. Disque de frein d'essieu suivant l'une des revendications précédentes, **caractérisé en ce qu'**il est prévu au moins trois moyens à complémentarité de forme qui se correspondent.

8. Disque de frein d'essieu suivant l'une des revendications 2 à 7, **caractérisé en ce que** les griffes (6) sont formées sur l'anneau (5) de serrage.

9. Disque de frein d'essieu suivant l'une des revendications 2 à 8, **caractérisé en ce que** les griffes (6) sont, en tant que pièces distinctes, assemblées de manière fixe à l'anneau (5) de serrage.

10. Disque de frein d'essieu suivant l'une des revendications précédentes, **caractérisé en ce que** les saillies et les cavités s'étendent radialement par rapport à l'axe (X) central.
